# EUROPEAN PATENT SPECIFICATION

(11) **EP 1 921 365 B1**
(45) Date of publication and mention of the grant of the patent: **07.04.2010**
(21) Application number: 06123678.2
(22) Date of filing: 08.11.2006
(51) Int. Cl.: F16L 59/14

(54) **System for transporting a cryogenic medium**
System für den Transport von tiefgekühlten Medien
Système pour le transport de fluides cryogéniques

(43) Date of publication of application: 14.05.2008
(73) Proprietor: DeMaCo Holland bv, Noord-Scharwoude (NL)
(72) Inventor: Wulffers, Chris, Noord-Scharwoude (NL)
(74) Representative: Hooiveld, Arjen Jan Winfried

(56) References cited:
- EP-A1- 1 363 062
- DE-A1- 2 431 820

## Description

The invention relates to a system for transporting a cryogenic medium from a first container for the cryogenic medium to a second container or an installation for the cryogenic medium, according to the precaracterising portion of claim 1.

Such a system is generally known DE 2431820 A1. With the known system, a cryogenic medium, for example in the form of a liquid natural gas, is transported from a first terminal with a first tank to a second terminal with a second tank, with the transmission line for the liquid natural gas extending between the two terminals. The transmission line is built up of an inner tube for the liquid natural gas (the so-called process pipe) and an outer tube that is arranged in concentrical, spaced-apart relationship with said inner tube. A vacuum is maintained in the space of annular cross-section that is present between the two tubes so as to insulate the outer tube from the inner tube. Liquid natural gas has a temperature of about -160 °C at atmospheric pressure, so that the inner tube will shrink as a result of the temperature difference between the cold liquid natural gas and the comparatively warm environment. In order to compensate for said shrinkage, compensation bellows are used in the jacket of the inner tube of the known system. The compensation bellows may vary in length, to such an extent that they are capable of compensating for a variation in length of the inner tube resulting from the aforesaid temperature difference.

A drawback of the known system is the use of the aforesaid compensation bellows therein, which makes the manufacture of the transmission line a labourious process requiring complex and costly tools. In addition, the transmission line may easily get damaged at the location of the vulnerable compensation bellows.

It is the object of the invention to improve the prior art, in the sense that it will no longer be necessary to use the aforesaid compensation bellows.

In order to accomplish that object, a system according to claim 1 is proposed. The invention is based inter alia on the concept of a "bellowless" transmission line acting as an "autocompensating" transferline. As already said before, the inner tube or the process line shrinks under the influence of the temperature of the cryogenic medium. As a result of the very rigid connection of the ends of the outer tube to the inner tube, however, only partial shrinkage is possible. As a result, the outer tube is axially loaded in compression, whilst the inner tube is axially loaded in tension.

According to the invention, the ends of the outer tube converge towards the inner tube, being rigidly connected to the inner tube by means of a stress distribution ring. The aforesaid tension load on the inner tube results in elongation thereof, as a result of which the inner tube is plastically deformed. The stress distribution ring functions to distribute said plastic deformation of the inner tube over (part of the length of) the inner tube, so that local stresses (plastic deformations) in the inner tube are avoided. In this way fracture of the inner tube is prevented.

According to the invention, a stress distribution ring is provided on the outer tube near the location where said tube converges. As already said before, the stress distribution ring functions to distribute stresses caused by shrinkage that occurs at the location of the rigid connection between the ends of the outer tube and the inner tube over the conical ends of the outer tube. The present stress distribution ring on the outer tube, near the location where said outer tube converges, functions to prevent bulging of the outer tube as a result of the high local shrinkage stresses.

According to the invention, the stress distribution ring(s) is (are) elastically deformable. An elastically deformable ring can return to its starting position (i.e. to its position before the outer tube and the inner tube were loaded in compression and in tension, respectively) after deformation (i.e. after the outer and the inner ring were axially loaded in compression and in tension, respectively).

According to the invention, the thermal means in the annular space are formed by a vacuum. As a result of said vacuum, hardly any heat conduction takes place between the inner and outer tube, if at all, so that the temperature gradient (in many practical cases more than 200 °C) therebetween is maintained. The inner tube thus retains a temperature that is at least substantially the same as the temperature of the cryogenic medium, whilst the temperature of the outer tube remains at least substantially the same as that of the environment.

According to the invention, an annular weld is provided on the outer tube near the location where said outer tube converges.

In another preferred embodiment of a system according to the invention, the inner tube and the outer tube are at least substantially made of austenitic steel. Experiments have shown that austenitic steel remains tough at the very low temperatures that usually occur with cryogenic applications. In addition, research has shown that austenitic steel is capable of a very high degree of plastic elongation before constriction and fracture, for example of the inner tube, occurs. The degree of plastic elongation of austenitic steel has in particular appeared to be much higher than that of ferritic steel.

Preferably, the outer tube comprises a vacuum valve. Via said vacuum valve, air that was originally present in the aforesaid space of annular cross-section can easily be pumped out. Once the air has been pumped out of the space between the inner and the outer tube, the transmission line is ready for use. The vacuum valve may be fixed to the outer tube by means of a strengthening piece. In addition to the vacuum valve, or instead thereof, an underpressure valve may be used.

It is noted that also the occurrence of so-called (virtual) leaks in the space between the inner tube and the outer tube must be prevented. Such leaks, which lead to a gradual flow of air into said space via the leak, may be caused by inaccurate welding of the aforesaid stress distribution ring(s).

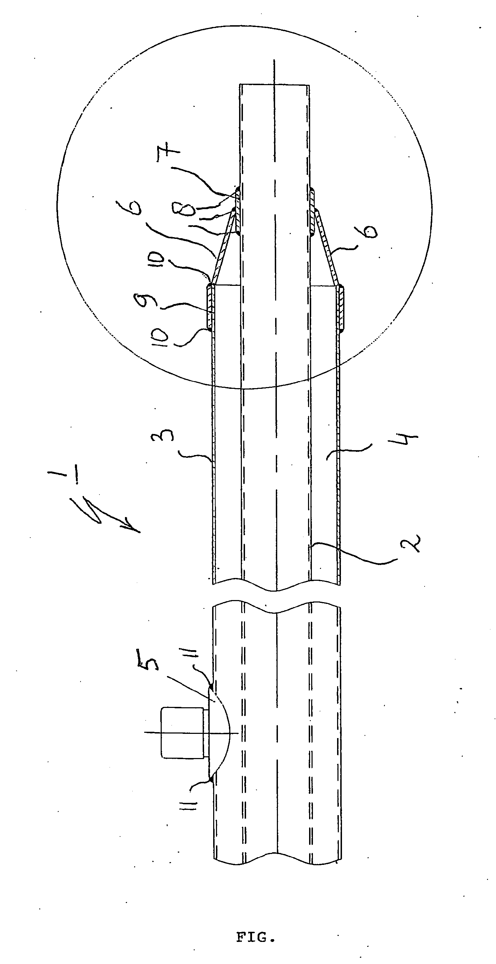

The invention will now be explained in more detail with reference to a figure illustrated in the drawing, which shows a preferred variant of a transmission line according to the invention.

The figure shows a longitudinal view of a transmission line 1 consisting of an inner and an outer tube 2, 3 of austenitic steel, which are concentrically arranged relative to each other, whilst a space 4 of annular cross-section is present between the inner and the outer tube 2, 3. The inner tube 2 functions to transport the cryogenic medium, for example liquid natural gas. A vacuum is maintained in the space 4 for the purpose of thermally insulating the outer tube 3 from the inner tube 2. As a result, the inner tube 2 takes on the temperature of the liquid natural gas (approximately -160 °C at atmospheric temperature), whilst the temperature of the outer tube 3 is the same as the ambient temperature. Air is pumped from the space 4 by means of a vacuum valve 5 before the transmission line 1 is used.

The outer tube 3 is fixed to the inner tube 2 with its ends 6 that converge towards the inner tube 2. In particular, the conical ends 6 are welded to the inner tube 2 by means of a stress distribution ring 7. Welds 8 are used for that purpose. This prevents the occurrence of local plastic deformation of the inner tube 2 resulting from shrinkage under the influence of the temperature of the liquid natural gas. In other words, the stress distribution ring 7 and the welds 8 distribute the high shrinkage stress over (part of the length of) the inner tube 2.

A stress distribution ring 9 is also used at the location where the outer tube 3 converges, which ring 9 is fixed to the outer tube 3 by means of welds 10. The stress distribution ring 9 and the welds 10 prevent the occurrence of bulges in the inner tube 2 resulting from the high shrinkage stresses.

The two stress distribution rings 7, 9 are likewise made of austenitic steel. As the figure shows, the vacuum valve 5 is likewise connected to the outer tube 3 by means of welds 11.

The transmission line 1 is a "bellowless" transmission line.

It is noted that the invention is not restricted to the embodiment as shown herein, but that it also extends to other preferred variants that fall within the scope of the appended claims.

## Claims

1. A system for transporting a cryogenic medium from a first container for the cryogenic medium to a second container or an installation for the cryogenic medium, comprising a transmission line (1) extending between the container(s), which transmission line (1) comprises an inner tube (2) and an outer tube (3) (3), which are concentrically arranged relative to each other, which inner tube (2) functions to transport the cryogenic medium, whilst a space (4) of annular cross-section is present between the inner and the outer tube (2,3), which transmission line (1) comprises compensation means capable of compensating for shrinkage resulting form a difference in temperature between the cryogenic medium and the environment, and the compensation means comprise a rigid connection of ends of the outer tube (3) to the inner tube (2) so as to prevent local plastic deformation of the inner tube (2) upon elongation thereof, which connection is more rigid than the inner tube (2), **characterised in that** the outer tube (3) is thermally insulated from the inner tube (2) by vacuum in said annular space (4), and wherein the ends (6) of the outer tube (3) converge towards the inner tube (2), being rigidly connected to the inner tube (2) by means of a stress distribution ring (7), and wherein a stress distribution ring (9) is provided on the outer tube (3) near the location where said tube (3) converges, said stress distribution rings (7, 9) being elastically deformable.

2. A system according to claim 1, wherein an annular weld (10) is provided on the outer tube (3) near the location where said outer tube (3) converges.

3. A system according to claim 1 or 2, wherein the inner tube (2) and the outer tube (3) are at least substantially made of austenitic steel.

4. A system according to claim 1, 2 or 3, wherein the outer tube (3) comprises a vacuum valve (5)/or an underpressure valve.

5. A system according to claim 4, wherein the valve (s) (5) are fixed to the outer tube (3) by means of a strengthening piece (11).

## Patentansprüche

1. System für den Transport eines kryogenen Mediums von einem ersten Behälter für das kryogene Medium zu einem zweiten Behälter oder einer Anlage für das kryogene Medium, umfassend eine Übertragungsleitung (1), die sich zwischen dem bzw. den Behälter(n) erstreckt, wobei die Übertragungsleitung (1) ein inneres Rohr (2) und ein äußeres Rohr (3) umfasst, die im Bezug zueinander konzentrisch angeordnet sind, welches innere Rohr (2) fungiert, um das kryogene Medium zu transportieren, während ein Zwischenraum (4) von ringförmigem Querschnitt zwischen dem inneren und dem äußeren Rohr (2, 3) vorhanden ist, welche Übertragunsleitung (1) ein Kompensationsmittel umfasst, das die aus einem Unterschied der Temperatur zwischen dem kryogenen Medium und der Umgebung resultierende Schrumpfung kompensieren kann, und wobei das Kompensationsmittel eine starre Verbindung von Enden des äußeren Rohres (3) zu dem inneren Rohr (2) umfasst, um so eine lokale plastische Deformation des inneren Rohres (2) bei Dehnung desselben zu verhindern, welche Verbindung starrer ist als das innere Rohr (2), und **dadurch gekennzeichnet, dass** das äußere Rohr (3) thermisch von dem inneren Rohr (2) durch Vakuum in dem ringförmigen Zwischenraum (4) isoliert ist, wobei die Enden (6) des äußeren Rohres (3) in Richtung auf das innere Rohr (2) konvergieren, starr verbunden mit dem inneren Rohr (2) mittels eines Spannungsverteilungsrings (7), und wobei ein Spannungsverteilungsring (9) am äußeren Rohr (3) nahe der Stelle bereitgestellt ist, wo das Rohr (3) konvergiert, wobei die Spannungsverteilungsringe (7, 9) elastisch deformierbar sind.

2. System nach Anspruch 1, wobei eine ringförmige Schweißnaht (10) am äußeren Rohr (3) nahe der Stelle bereitgestellt ist, wo das äußere Rohr (3) konvergiert.

3. System nach Anspruch 1 oder 2, wobei das innere Rohr (2) und das äußere Rohr (3) wenigstens im wesentlichen aus austenitischem Stahl hergestellt sind.

4. System nach Anspruch 1, 2 oder 3, wobei das äußere Rohr (3) ein Vakuumventil (5) oder ein Unterdruckventil umfasst.

5. System nach Anspruch 4, wobei das bzw. die Ventil(e) (5) an dem äußeren Rohr (3) mittels eines Verstärkungsstückes (11) befestigt ist bzw. sind.

## Revendications

1. Système de transport d'un fluide cryogénique d'un premier conteneur destiné au fluide cryogénique vers un deuxième conteneur ou une installation destinée au fluide cryogénique, ledit système comprenant une ligne de transmission (1) s'étendant entre les conteneurs, laquelle ligne de transmission (1) comprend un tube intérieur (2) et un tube extérieur (3), qui sont disposés concentriquement l'un par rapport à l'autre, lequel tube intérieur (2) a pour fonction de transporter le fluide cryogénique, tandis qu'un espace (4) de section annulaire est ménagé entre les tubes intérieur et extérieur (2, 3), laquelle ligne de transmission (1) comprend des moyens de compensation aptes à compenser un rétrécissement dû à une différence de température entre le fluide cryogénique et l'environnement, les moyens de compensation comprenant un raccordement rigide des extrémités du tube extérieur (3) au tube intérieur (2) de manière à empêcher une déformation plastique locale du tube intérieur (2) lors de son élongation, lequel raccordement est plus rigide que le tube intérieur (2), **caractérisé en ce que** le tube extérieur (3) est isolé thermiquement du tube intérieur (2) par un vide présent dans ledit espace annulaire (4), et **en ce que** les extrémités (6) du tube extérieur (3) convergent en direction du tube intérieur (2), en étant rigidement raccordées au tube intérieur (2) au moyen d'une bague de distribution de contraintes (7), et une bague de distribution de contraintes (9) étant prévue sur le tube extérieur (3) près de l'emplacement où ledit tube (3) converge, lesdites bagues de distribution de contraintes (7, 9) étant déformables élastiquement.

2. Système selon la revendication 1, dans lequel une soudure annulaire (10) est prévue sur le tube extérieur (3) près de l'emplacement où ledit tube extérieur (3) converge.

3. Système selon la revendication 1 ou 2, dans lequel le tube intérieur (2) et le tube extérieur (3) sont fabriqués, au moins sensiblement, en acier austénitique.

4. Système selon la revendication 1, 2 ou 3, dans lequel le tube extérieur (3) comprend un clapet à vide (5) ou un clapet à dépression.

5. Système selon la revendication 4, dans lequel le ou les clapets (5) sont fixés au tube extérieur (3) au moyen d'une pièce de renforcement (11).
